# EUROPEAN PATENT APPLICATION

(11) **EP 4 249 354 A1**
(43) Date of publication of application: **27.09.2023**
(21) Application number: 21894550.9
(22) Date of filing: 11.11.2021
(51) Int. Cl.: B62D 49/00, B60K 15/035

(54) **TRACTOR**

(30) Priority: 17.11.2020 JP 2020190829
(71) Applicant: Yanmar Holdings Co., Ltd., Osaka-shi, Osaka 530-8311 (JP)
(72) Inventor: KOMORI, Kenji, Osaka-shi Osaka 530-8311 (JP)
(74) Representative: Dennemeyer & Associates S.A.
(86) International application number: PCT/JP2021/041501
(87) International publication number: WO 2022/107676

(57) **Abstract**

This tractor comprises a driving section, a step (11), a front part (13) of a fuel tank (12) serving as a fuel storage section, and a breather hose (27). The step (11) is provided to the driving section and is a step for getting into and out of the driving section. The front part (13) of the fuel tank (12) has a fuel supply port (20) and is provided in front of the step (11). The breather hose (27) is connected to a breather port (26) provided in the front part (13) of the fuel tank (12). The breather hose (27) is provided so as to extend in the vertical direction of a traveling body, such that the upper part of the breather hose (27) is positioned higher than the fuel supply port (20). The breather hose (27) is provided with an air outlet (28) that connects the lower part of the breather hose (27) to the breather port (26) and constitutes an outlet for air from the breather port (26) in the upper part of the breather hose (27).

## Description

### TECHNICAL FIELD

The present invention relates to a tractor.

### BACKGROUND ART

Conventionally, tractors such as those described in Patent Literatures 1 and 2 are known, in which a part of a fuel tank for fuel storage is provided in front of a step used for getting into and out of a driving section, and a fuel supply port is provided at a part of the fuel tank. Tractors with a breather structure in the fuel tank are also known. Patent Literatures 3 and 4 disclose this type of tractor.

The tractor described in Patent Literature 3 is provided with a left fuel tank located below a left side of a floor of a cabin. The left fuel tank has a front portion that extends upward in front of the cabin. A fueling port is provided at the front portion to supply fuel to the fuel tank. In the left fuel tank, a breather convex portion is formed near the floor of the cabin. A breather hose extends from the breather convex portion. An opening end of the breather hose leading to outside air is attached to a hood brace that supports the hood at a higher position above the left fuel tank.

The tractor described in Patent Literature 4 is provided with a driver's seat at a rear part of a cabin. A fuel tank is arranged on a side of the driver's seat. A breather port is provided at an upper part of the fuel tank. A breather hose is connected to the breather port. The breather hose is provided to extend to a high position above the fuel tank. The breather hose is fixed inside a rear frame at a rear part of the tractor.

### CITATION LIST

Patent Literature

Patent Literature 1: JP 2016-068626 A
Patent Literature 2: JP 2016-088389 A
Patent Literature 3: JP 2007-297006 A
Patent Literature 4: JP 2005-178490 A

### DISCLOSURE OF INVENTION

### PROBLEMS TO BE SOLVED BY THE INVENTION

However, in the configuration of Patent Literature 3 described above, a configuration for providing a breather structure to the fuel tank is complicated, and maintenance work for the breather structure (configuration member such as the breather hose) is difficult. In the configuration of Patent Literature 4 described above, the fuel tank is arranged on the side of the driver's seat, thus making maintenance work for the breather structure (configuration member such as the breather hose) difficult. Therefore, there is room for improvement in this regard.

The present invention was made in view of the above circumstances, and an object thereof is to provide a tractor equipped with a breather structure, which is a simple structure and is easy to perform maintenance work, in the fuel storage section.

### MEANS FOR SOLVING THE PROBLEMS

### EFFECT OF THE INVENTION

The problem to be solved by the present invention is as above, and the means for solving the problem and effects by the means are described below.

According to an aspect of the present invention, there is provided a tractor having the following configuration. That is, the tractor includes a driving section, a step, a fuel storage section, and a breather hose. The driving section is a section that is provided on a traveling machine body and where a driver gets into and out of. The step is a step that is provided to the driving section and used for getting into and out of the driving section. The fuel storage section has a fuel supply port and is provided in front of the step. The breather hose is connected to a breather port provided at the fuel storage section. The breather hose is provided so as to extend in an up-down direction of the traveling machine body in such a manner that an upper part of the breather hose is positioned above the fuel supply port. The breather hose is provided such that a lower part of the breather hose is connected to the breather port, and an air outlet that constitutes an outlet for air from the breather port is provided at the upper part of the breather hose.

This enables the breather hose to be attached to the fuel storage section with a simple structure. This also facilitates maintenance work on the breather hose. Furthermore, this can make it difficult for fuel in the fuel storage section to be discharged through the breather hose to outside the fuel storage section when the tractor comes to a sudden stop, for example.

The tractor described above preferably has the following configuration. That is, the fuel supply port and the breather port are provided on an upper surface of the fuel storage section. The breather port is arranged outside in a vehicle width direction on the upper surface of the fuel storage section.

This enables easier access to the breather hose from outside of the tractor, which improves the maintainability of the breather hose. This also makes it possible to arrange the breather port close to the fuel supply port as much as possible, reducing the amount of fuel that is blown back into the breather hose from within the fuel storage section through the breather port when the fuel is supplied from the fuel supply port.

The tractor described above preferably has the following configuration. That is, the tractor includes a partition member. The partition member is provided between a driver's seat provided in the driving section and a front vehicle wheel arranged in front of the driving section and partitions at least part of a space between the driver's seat and the front vehicle wheel. The breather hose is supported by the partition member.

This enables a simple attachment structure for the breather hose. This also facilitates maintenance work on the breather hose.

The tractor described above preferably has the following configuration. That is, the partition member has at least one of a frame part composed of a frame-shaped member and a plate part composed of a plate-shaped member. The partition member supports the breather hose by the frame part or the plate part.

This enables the breather hose to be supported by the partition member with a simple structure. This also improves the maintainability of the breather hose.

The tractor described above preferably has the following configuration. That is, the tractor includes a cover. The cover is arranged around at least the upper part of the breather hose and covers at least the upper part of the breather hose.

This enables the cover to protect at least the upper part of the breather hose. This can also prevent fuel in the fuel storage section from leaking out through the air outlet and splashing outside the tractor when the tractor tips over.

The tractor described above preferably has the following configuration. That is, the tractor includes a bar-shaped member. The bar-shaped member is provided at least in front of the breather port.

This enables the use of the bar-shaped member to protect the breather port and the vicinity thereof from objects such as grass or branches that approach the breather port when the tractor is traveling, etc.

The tractor described above preferably has the following configuration. That is, the tractor includes a cover. The cover is arranged around at least the upper part of the breather hose and covers at least the upper part of the breather hose. The bar-shaped member is attached to the cover. The bar-shaped member partitions a space around the breather port and the fuel supply port into a first space in which the breather port and the fuel supply port are located and a second space that is located in front of the first space.

This makes it easier to install the bar-shaped member. The bar-shaped member can be used to protect the fuel supply port and the vicinity thereof from objects such as grass or branches that approach the fuel supply port when the tractor is traveling, etc.

### BRIEF DESCRIPTION OF DRAWINGS

FIG. 1 is a left side view of a tractor according to an embodiment of the present invention.
FIG. 2 is a lower perspective view of a part of the tractor.
FIG. 3 is a perspective view of a fuel tank.
FIG. 4 is a perspective view illustrating a state in which a cover and a bar-shaped member are not applied to a breather structure.
FIG. 5 is a front perspective view illustrating a configuration of the breather structure in the state of FIG. 4.
FIG. 6 is a rear perspective view illustrating the configuration of the breather structure in the state of FIG. 4.
FIG. 7 is a perspective view illustrating a state in which a cover and a bar-shaped member are applied to a breather structure.
FIG. 8 is a rear perspective view illustrating a configuration of the breather structure in the state of FIG. 7.
FIG. 9 is a perspective view illustrating a first sheet-like member provided in a driving section.
FIG. 10 is a perspective view illustrating the driving section without the first sheet-like member.
FIG. 11 is a plan view illustrating a second sheet-like member provided in the driving section.

### DESCRIPTION OF EMBODIMENTS

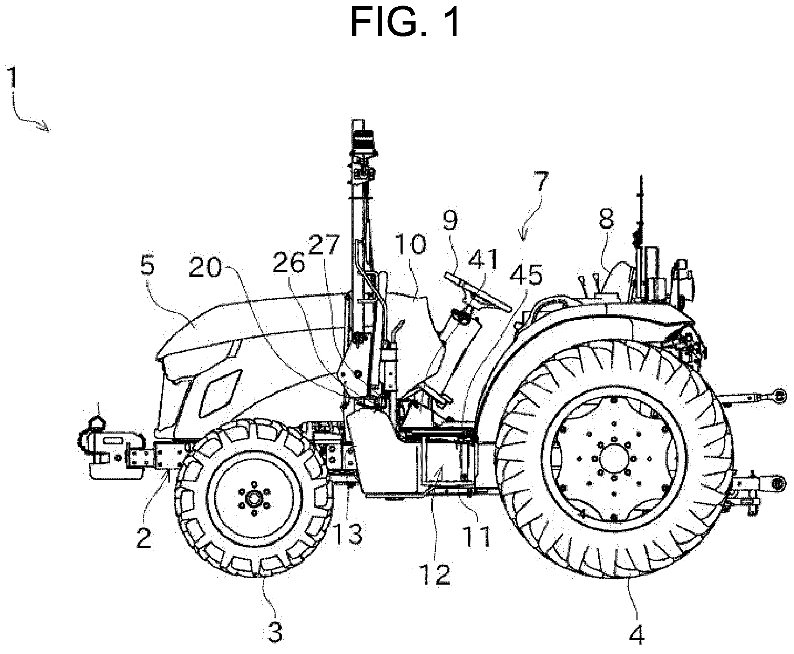

In the following, embodiments of the present invention are described with reference to the drawings. FIG. 1 is a left side view of a tractor 1 according to an embodiment of the present invention. In the following description, a left side is referred to as "left" and a right side as "right" relative to a direction in which the tractor 1 moves forward. A left-right direction corresponds to the vehicle width direction of the tractor 1.

As illustrated in FIG. 1, the tractor 1 includes a traveling machine body 2, which is composed of a machine body frame or the like. The traveling machine body 2 is supported by a pair of left and right front wheels (front vehicle wheels) 3 and a pair of left and right rear wheels 4 as traveling wheels. The traveling machine body 2 is configured so that a work machine can be attached to and detached from a rear part of the traveling machine body 2. Examples of the work machine include various work machine such as a tiller, a plow, a fertilizer applicator, a mower, and a seeder.

A hood 5 is arranged at a front part of the traveling machine body 2 of the tractor 1. The hood 5 can be opened and closed so that the interior thereof can be exposed. Inside the hood 5, an engine is arranged as a drive unit. In the present embodiment, the engine is composed of a diesel engine, but may be any other type of engine.

A driving section 7 of the tractor 1 is arranged behind the hood 5. The driving section 7 includes a driver's seat 8 and a steering wheel 9. A driver of the tractor 1 can sit in the driver's seat 8. The steering wheel 9 is arranged in front of the driver's seat 8. In the driving section 7, a dashboard 10 is arranged in front of the steering wheel 9.

The dashboard 10 is provided adjacent to the hood 5 in a front-rear direction. On the dashboard 10, there are arranged operation tools for the driver to operate the tractor 1, etc., as well as gauges and other instruments that display various information such as travel speed. The driver can perform traveling and other operations of the tractor 1 using the steering wheel 9 and the aforementioned operation tools, etc.

A step 11 is provided to the driving section 7 and used for getting into and out of the driving section 7. The driver can place his or her feet on the step 11 when getting into and out of the driving section 7. In the present embodiment, the step 11 is provided on a left side part of the driving section 7. A fuel tank 12 is provided near the step 11 to store fuel supplied to the engine. The fuel tank 12 is supported by the traveling machine body 2.

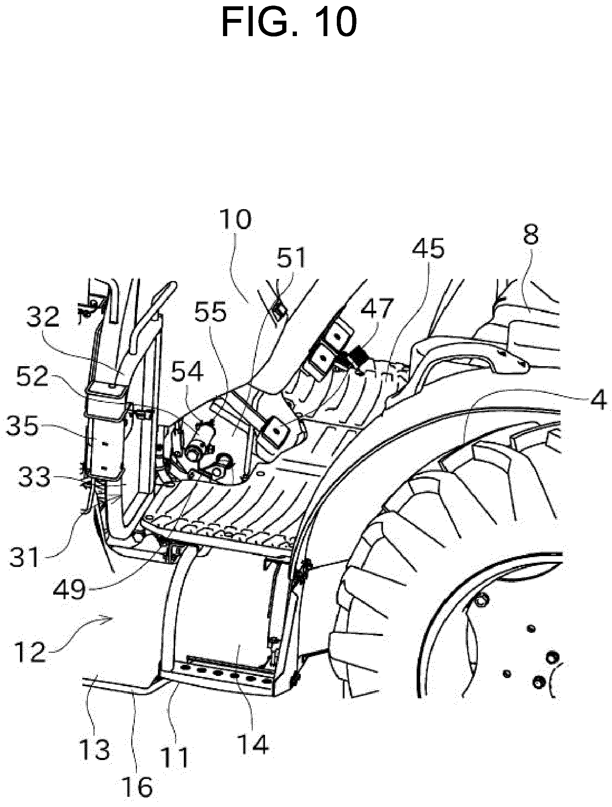

In the tractor 1, the engine in the hood 5 is driven by fuel from fuel tank 12 in response to traveling operation by the driver, and power generated by the engine is transmitted to the rear wheels 4 via a clutch housing 51 (see FIG. 10) arranged behind the engine and a transmission case, etc. This enables the tractor 1 to travel.

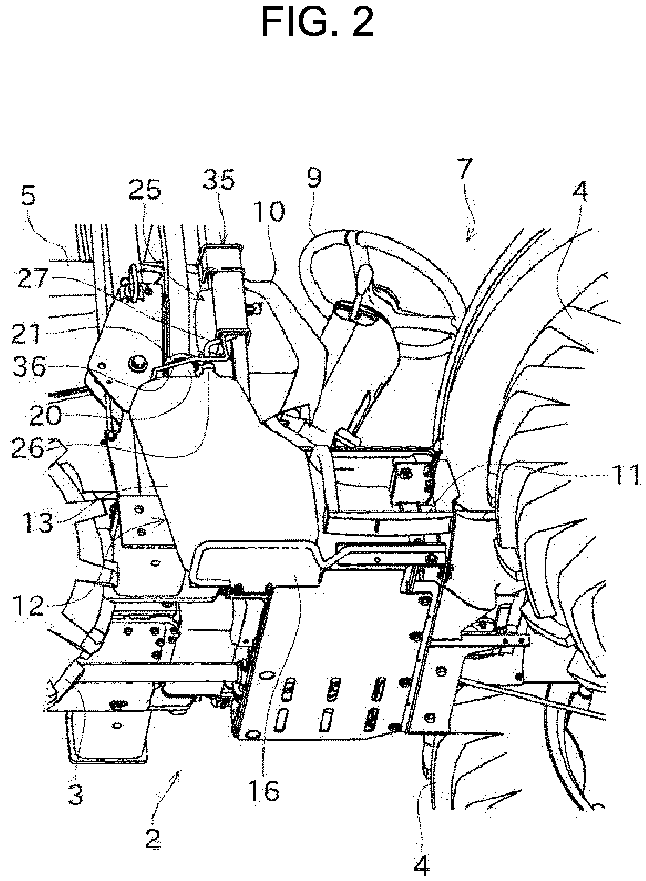

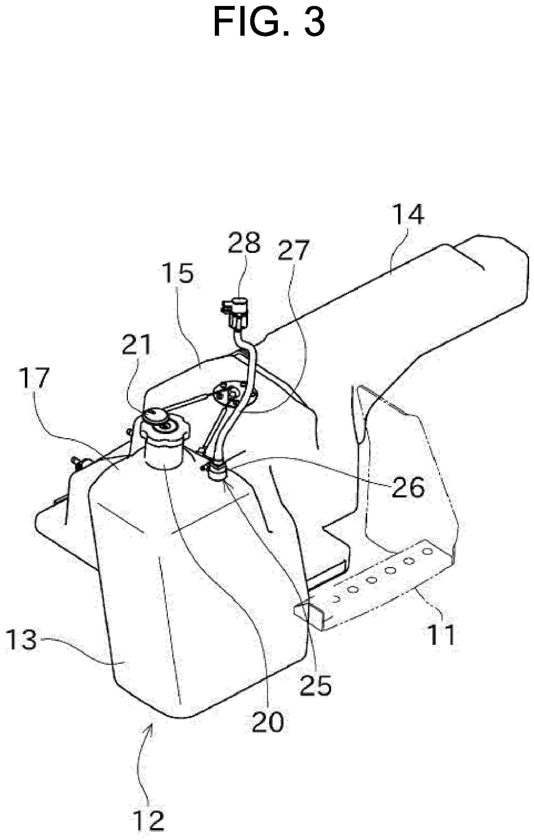

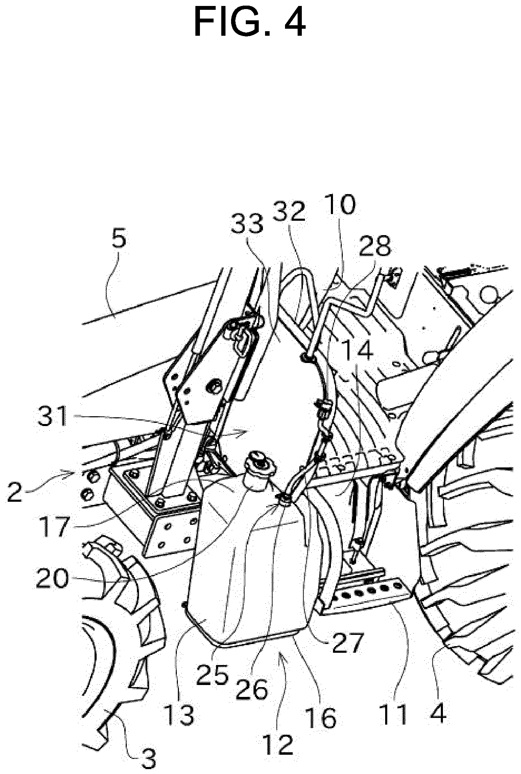

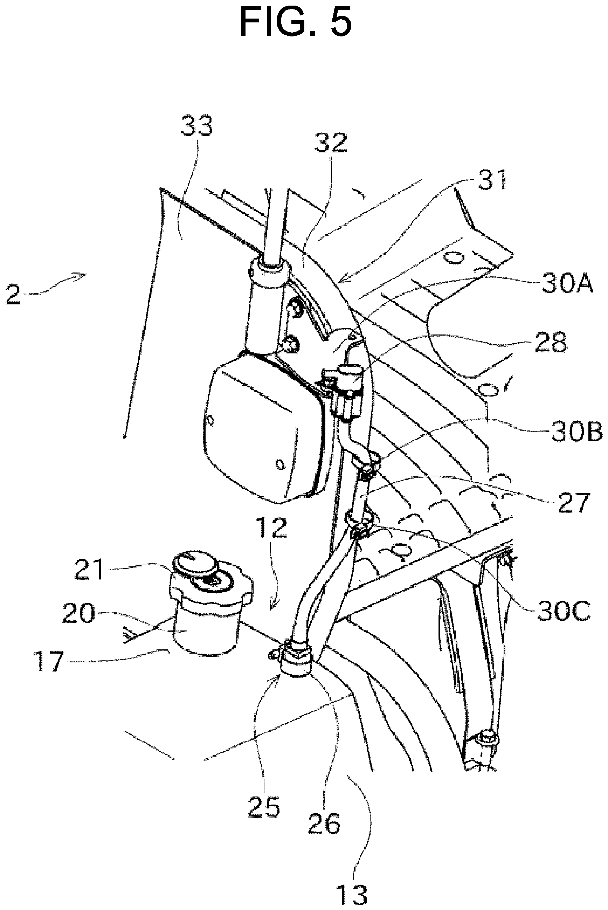

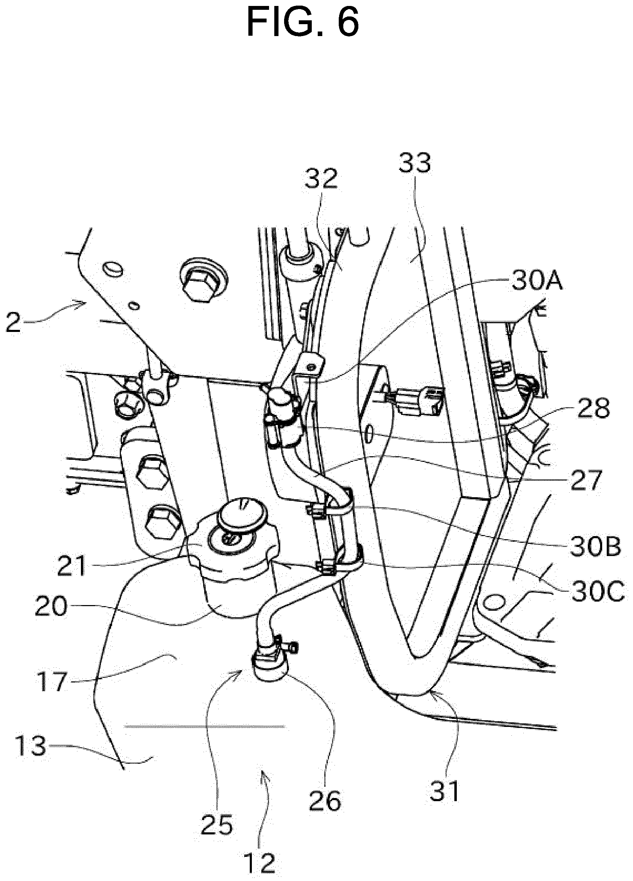

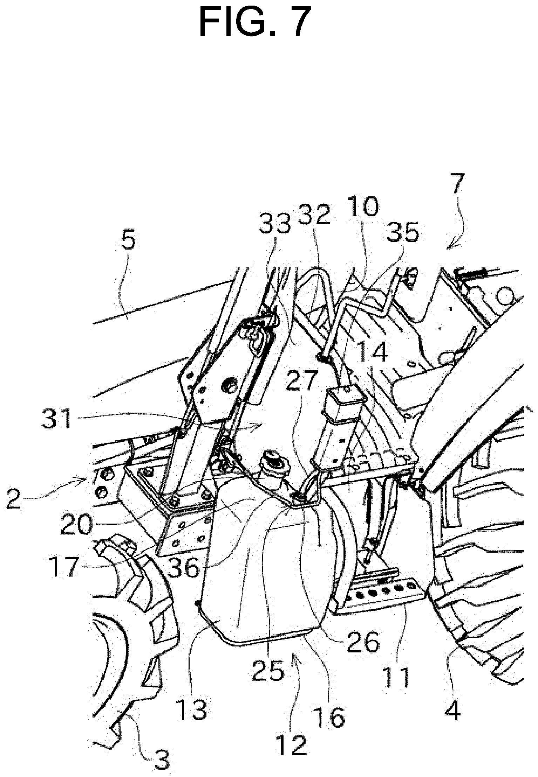

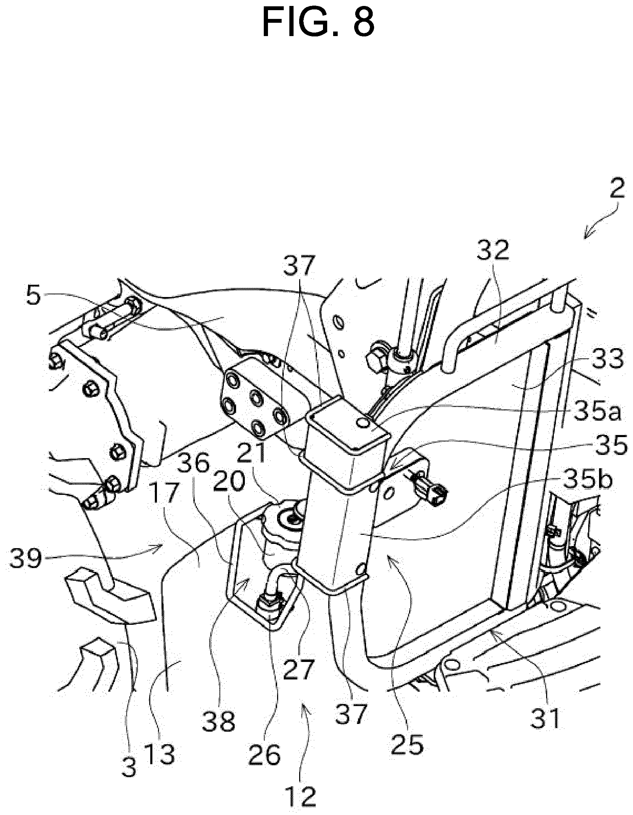

Next, with reference to FIGs. 1 to 8, the fuel tank 12 and a breather structure 25 applied thereto will be described. FIG. 2 is a lower perspective view of a part of the tractor 1. FIG. 3 is a perspective view of the fuel tank 12. FIG. 4 is a perspective view illustrating a state in which a cover 35 and a bar-shaped member 36 are not applied to the breather structure 25. FIG. 5 is a front perspective view illustrating a configuration of the breather structure 25 in the state of FIG. 4. FIG. 6 is a rear perspective view illustrating the configuration of the breather structure 25 in the state of FIG. 4. FIG. 7 is a perspective view illustrating a state in which the cover 35 and the bar-shaped member 36 are applied to the breather structure 25. FIG. 8 is a rear perspective view illustrating a configuration of the breather structure 25 in the state of FIG. 7.

As illustrated in FIGs. 1 and 2, the fuel tank 12 is provided near the step 11. The fuel tank 12 is supported by a support member 16 attached to the traveling machine body 2. The support member 16 is composed of a plate-like member. The support member 16 is positioned below the step 11 and is coupled to the frame of the traveling machine body 2. In the present embodiment, the fuel tank 12 is formed to extend approximately in the front-rear direction, As illustrated in FIG. 3. The fuel tank 12 has a front part (fuel storage section) 13, a rear part 14, and a front-rear intermediate part 15. The front-rear intermediate part 15 is provided to connect the front part 13 and the rear part 14. The rear part 14 of the fuel tank 12 is arranged below the driving section 7 and on inside (right side) of the left rear wheel 4 in the vehicle width direction. The front-rear intermediate part 15 of the fuel tank 12 is arranged below the driving section 7 and inside the step 11 in the vehicle width direction.

The front part 13 of the fuel tank 12 is arranged in front of the step 11 and also behind the left front wheel 3. That is, the front part 13 of the fuel tank 12 is arranged between the front wheel 3 and the step 11 in the front-rear direction. The front part 13 of the fuel tank 12 is arranged on left side near a rear end part of the hood 5 (the continuous portion where the hood 5 and the dashboard 10 are continuous in the front-rear direction). The front part 13 of the fuel tank 12 is formed to project upward from an up-down position slightly below a lower end position of the step 11.

In the front part 13 of the fuel tank 12, an upper surface 17 thereof is positioned below an upper surface of the hood 5. The upper surface 17 of the front part 13 of the fuel tank 12 is arranged to left side of an up-and-down intermediate part at the rear end part of the hood 5. A fuel supply port 20 having an opening or the like is provided on the upper surface 17 of the front part 13 of the fuel tank 12. The fuel supply port 20 is provided with a cap 21 to open and close the opening of the fuel supply port.

The breather structure 25 is applied to the fuel tank 12 configured in such a manner. As illustrated in FIG. 4, the breather structure 25 includes a breather port 26 and a breather hose 27. The breather port 26 is provided at the front part 13 of the fuel tank 12. In the present embodiment, the breather port 26 is provided at the upper surface 17 of the front part 13 of the fuel tank 12. The breather port 26 has an opening or the like and is arranged side by side with the fuel supply port 20 at the upper surface 17 of the front part 13 of the fuel tank 12.

A distance between the breather port 26 and the fuel supply port 20 can be set arbitrarily, but is preferably as small as possible. That is, the breather port 26 is preferably arranged as close as possible to the fuel supply port 20. By arranging the breather port 26 close to the fuel supply port 20, it is possible to reduce the amount of fuel that is blown back into the breather port 26 (breather hose 27) from within the front part 13 of the fuel tank 12 when fuel is fed into the fuel tank 12 through the fuel supply port 20.

As illustrated in FIGs. 4, 5, and 6, the breather hose 27 is provided at the breather port 26. The breather hose 27 is provided to extend in the up-down direction so that an upper part of the breather hose 27 (portion on one end side in a longitudinal direction) is positioned above the fuel supply port 20. A lower part of the breather hose 27 (portion on the other end side in the longitudinal direction) is connected to the breather port 26. An air outlet 28, which constitutes an outlet for air from the breather port 26, is provided at the upper part of the breather hose 27. Therefore, the air outlet 28 is arranged above the fuel supply port 20.

The breather port 26 is arranged on the upper surface 17 of the front part 13 of the fuel tank 12, outside (left side) in the vehicle width direction. The breather hose 27 is arranged above the breather port 26 in such a manner that the breather hose is positioned in a space just above the breather port 26. Thus, the breather port 26 and the breather hose 27 are arranged facing outside of the tractor 1 (outside on the left side). This facilitates access to the breather hose 27 from the outside of the tractor 1 and improves the maintainability of the breather hose 27.

Here, the fuel supply port 20 is arranged on inside (right side) in the vehicle width direction relative to the breather port 26 and the breather hose 27. Thus, it is possible to avoid the fuel supply port 20 hindering access to the breather hose 27 from the outside of the tractor 1.

The breather hose 27 is composed of a plastic hose in the present embodiment. The breather hose 27 is supported by a partition member 31 described below, which is provided on the traveling machine body 2. The breather hose 27 is approximately arranged on left side of the partition member 31. The upper part of the breather hose 27 on the one end side in the longitudinal direction includes the air outlet 28 at a top end thereof in such a manner that the air outlet 28 is arranged to be positioned below a top end of the partition member 31.

As illustrated in FIGs. 5 and 6, the breather hose 27 is fixed to the partition member 31 at a plurality of locations (three locations in the present embodiment) in the up-down direction. The breather hose 27 is held at the fixed locations using holding members 30A, 30B, and 30C, respectively. The holding members 30A, 30B, and 30C are arranged side by side at predetermined intervals in the up-down direction relative to the breather hose 27. The configuration for fixing the breather hose 27 to the traveling machine body 2 is not particularly limited.

The partition member 31 is provided between the front wheels 3 and the driver's seat 8 in the driving section 7. The partition member 31 partitions at least part of a space between the front wheels 3 and the driving section 7 in the front-rear direction. This enables the partition member 31 to prevent mud and the like, which is bounced off the front wheels 3 when the tractor 1 is traveling, from entering the driving section 7. The partition member 31 functions as a so-called mudguard member in the tractor 1.

The partition member 31 is provided on each of the left and right sides of the traveling machine body 2. In the present embodiment, the left and right partition members 31 are symmetrical. The left partition member 31 is arranged on left side of the dashboard 10 at a front part of the driving section 7. The right partition member 31 is arranged on right side of the dashboard 10 at the front part of the driving section 7.

The partition member 31 is arranged to project outward from the dashboard 10 in the vehicle width direction. The partition member 31 is arranged behind the front part 13 of the fuel tank 12. The partition member 31 is arranged so that a portion thereof (portion outside the vehicle width direction) overlaps an upper side portion of the front part 13 of the fuel tank 12 in the front-rear direction.

The partition member 31 has a frame part 32 and a plate part 33. However, any of the frame part 32 and the plate part 33 may be omitted. The frame part 32 is composed of a frame-like member. The plate part 33 is composed of a plate-like member. The partition member 31 is configured so that the frame part 32 surrounds the plate part 33 with the thickness of the plate part 33 facing the front-rear direction. The frame part 32 is supported by the driving section 7.

In the present embodiment, a cover 35 is applied to the breather hose 27, As illustrated in FIGs. 7 and 8. The cover 35 is provided to cover at least the upper part of the breather hose 27 (portion with the air outlet 28). The cover 35 is arranged around the upper part of the breather hose 27. In the present embodiment, the cover 35 is configured to cover only the upper part of the breather hose 27. The cover 35 has a box-shaped first member 35a and a box-shaped second member 35b. The first member 35a covers the air outlet 28 and the vicinity thereof of the upper part of the breather hose 27. The second member 35b covers the vicinity of a central part of the breather hose 27 in the up-down direction. The second member 35b is arranged adjacently below the first member 35a. Outer peripheral edges of the first member 35a and the second member 35b each are provided with an edge guard 37 made of a bar-shaped member.

The cover 35 is arranged on left side of the partition member 31. The cover 35 is detachably attached to the partition member 31 (in the present embodiment, the frame part 32). This enables the cover 35 to protect the air outlet 28 and other parts in the breather hose 27. This can also prevent fuel in the fuel tank 12 from leaking out through the air outlet 28 and splashing outside the tractor 1 when the tractor 1 tips over.

Furthermore, at least for the breather port 26 (part of the breather hose 27), a bar-shaped member 36 is provided. In the present embodiment, the bar-shaped member 36 is attached to the cover 35 and is provided for the breather port 26 and the fuel supply port 20. As illustrated in FIG. 8, the bar-shaped member 36 partitions a space around the breather port 26 and the fuel supply port 20 into at least a first space 38 in which the breather port 26 and the fuel supply port 20 are located and a second space 39 that is located in front of the first space. Thus, the bar-shaped member 36 functions as a front partition member.

In detail, the bar-shaped member 36 is arranged in front of the breather port 26 (exposed portion of breather hose 27 that is not covered by cover 35) and the fuel supply port 20. The bar-shaped member 36 is arranged so that the bar-shaped member 36 overlaps part of the breather port 26 and part of the fuel supply port 20 when viewed from the front.

One end side in the longitudinal direction of the bar-shaped member 36 is attached to the cover 35, and the other end in the longitudinal direction is a free end. The bar-shaped member 36 is provided to protrude from the cover 35. The bar-shaped member 36 is then bent appropriately in the middle of the longitudinal direction and arranged so that the other end in the longitudinal direction is above the upper surface 17 of the front part 13 of the fuel tank 12 and in front of the breather port 26 and the fuel supply port 20. This enables the use of the bar-shaped member 36 to protect the breather port 26 and the fuel supply port 20 from objects such as grass or branches that approach the breather port 26 and the fuel supply port 20 when the tractor 1 is traveling. The bar-shaped member 36 is preferably also arranged on sides of the breather port 26 and the fuel supply port 20.

As described above, the tractor 1 of the present embodiment includes the driving section 7, the step 11, the front part 13 of the fuel tank 12 as the fuel storage section, and the breather hose 27. The driving section 7 is provided on the traveling machine body 2 and is a section where a driver gets into and out of. The step 11 is a step that is provided to the driving section 7 and used for getting into and out of the driving section 7. The front part 13 of the fuel tank 12 has the fuel supply port 20 and is provided in front of the step 11. The breather hose 27 is connected to the breather port 26 provided at the front part 13 of the fuel tank 12. The breather hose 27 is provided so as to extend in the up-down direction of the traveling machine body 2 in such a manner that the upper part of the breather hose 27 is positioned above the fuel supply port 20. The breather hose 27 is provided such that the lower part of the breather hose 27 is connected to the breather port 26, and the air outlet 28 that constitutes an outlet for air from the breather port 26 is provided at the upper part of the breather hose 27.

This enables the breather hose 27 to be attached to the front part 13 of the fuel tank 12 with a simple structure. This also facilitates maintenance work on the breather hose 27. Furthermore, this can make it difficult for fuel in the fuel tank 12 to be discharged through the breather hose 27 to outside the fuel tank 12 when the tractor 1 comes to a sudden stop, for example.

In the tractor 1 of the present embodiment, the fuel supply port 20 and the breather port 26 are provided on the upper surface of the front part 13 of the fuel tank 12. The breather port 26 is arranged outside in the vehicle width direction on the upper surface of the front part 13 of the fuel tank 12.

This enables easier access to the breather hose 27 from outside of the tractor 1, which improves the maintainability of the breather hose 27. This also makes it possible to arrange the breather port 26 close to the fuel supply port 20, reducing the amount of fuel that is blown back into the breather hose 27 from within the front part 13 of the fuel tank 12 through the breather port 26 when the fuel is supplied from the fuel supply port 20.

The tractor 1 of the present embodiment also includes the partition member 31. The partition member 31 is provided between the driver's seat 8 provided in the driving section 7 and the front wheel 3 arranged in front of the driving section 7, and partitions at least part of a space between the driver's seat 8 and the front wheel 3. The breather hose 27 is supported by the partition member 31.

This enables a simple attachment structure for the breather hose 27. This also facilitates maintenance work on the breather hose 27.

In the tractor 1 of the present embodiment, the partition member 31 has at least one of the frame part 32 composed of a frame-shaped member and the plate part 33 composed of a plate-shaped member. The partition member 31 supports the breather hose 27 by the frame part 32.

This enables the breather hose 27 to be supported by the partition member 31 with a simple structure. This also improves the maintainability of the breather hose 27.

The tractor 1 of the present embodiment also includes the cover 35. The cover 35 is provided around at least the upper part of the breather hose 27 and covers at least the upper part of the breather hose 27.

This enables the cover 35 to protect at least the upper part of the breather hose 27. This can also prevent fuel in the fuel tank 12 (front part 13) from leaking out through the air outlet 28 and splashing outside the tractor 1 when the tractor 1 tips over.

The tractor 1 of the present embodiment also includes the bar-shaped member 36. The bar-shaped member 36 is provided at least in front of the breather port 26.

This enables the use of the bar-shaped member 36 to protect the breather port 26 and the vicinity thereof from objects such as grass or branches that approach the breather port 26 when the tractor 1 is traveling, etc.

In the tractor 1 of the present embodiment, the bar-shaped member 36 is attached to the cover 35. The bar-shaped member 36 partitions a space around the breather port 26 and the fuel supply port 20 into the first space 38 in which the breather port 26 and the fuel supply port 20 are located and the second space 39 that is located in front of the first space 38.

This makes it easier to install the bar-shaped member 36. The bar-shaped member 36 can be used to protect the fuel supply port 20 and the vicinity thereof from objects such as grass or branches that approach the fuel supply port 20 when the tractor 1 is traveling, etc.

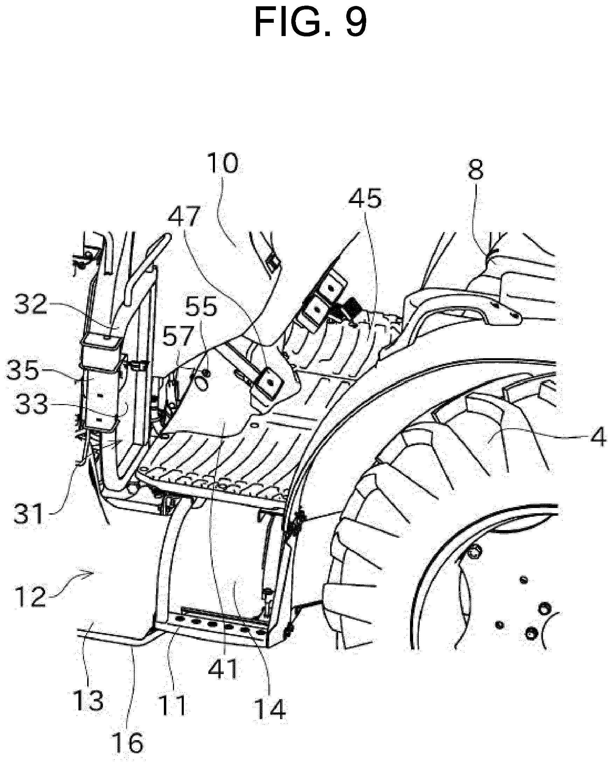

In the present embodiment, a first sheet-like member 41 and a second sheet-like member 42 are provided at the driving section 7. Specifically, As illustrated in FIGs. 1 and 9, in the driving section 7, below the steering wheel 9, there is a floor 45 that is a portion on which the driver can place his or her feet. As illustrated in FIG. 10, a first opening 49 is provided at a front portion of the floor 45, located below various pedals such as a clutch pedal 47.

Apart of a clutch housing 51 is arranged below the first opening 49. As illustrated in FIG. 9, the first sheet-like member 41 is provided on the floor 45 to cover the first opening 49. The first sheet-like member 41 is composed of a rubber member in the present embodiment. This makes it difficult for the sound generated at the clutch housing 51 to be transmitted to the driving section 7, thereby improving the quietness of the driving section 7.

In the present embodiment, As illustrated in FIG. 10, a band 54 is attached to a boss 52 of the clutch housing 51, and the band 54 is provided with a projection 55 that protrudes therefrom. As illustrated in FIG. 9, the projection 55 penetrates the first sheet-like member 41 from a lower side with the first opening 49 is covered, and a washer 57 is attached to the tip end of the projection 55 located on the opposite side of the band 54 with respect to the first sheet-like member 41. Thus, the first sheet-like member 41 is held to cover the first opening 49 by the projection 55 and the washer 57.

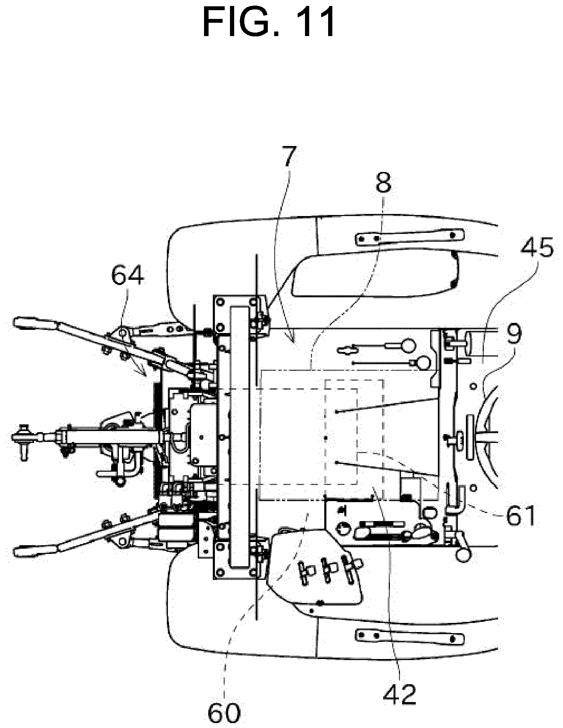

As illustrated in FIG. 11, in the driving section 7, a flat installation portion 60 is provided below the driver's seat 8 for installing the driver's seat 8. The installation portion 60 is arranged behind the floor 45 and located above the floor 45. The installation portion 60 is provided with a second opening 61. When a work machine is attached to a rear part of the traveling machine body 2, a part of an elevating device 64 for elevating the work machine is arranged below the second opening 61.

The second sheet-like member 42 is then provided at the installation portion 60 to cover the second opening 61. The second sheet-like member 42 is arranged to cover the approximately entire area of the installation portion 60 in the present embodiment. This makes it difficult for the sound generated by the elevating device 64 to be transmitted to the driving section 7, thereby improving the quietness of the driving section 7. In order to further improve the quietness of the driving section 7, it is preferable to provide an appropriate sound-absorbing material between the installation portion 60 and the second sheet-like member 42.

Although the preferred embodiment of the present invention has been described above, the above configurations can be modified as follows.

The shape of the fuel tank 12 is not particularly limited. It is sufficient for the fuel tank 12 provided with a portion corresponding to the front part 13.

The breather hose 27 may be supported by the plate part 33 of the partition member 31 instead of the frame part 32 of the partition member 31.

The shape of the cover 35 is not particularly limited. The cover 35 may for example, be formed to cover the entire breather hose 27. In this case, the bar-shaped member 36 is not needed. The cover can then also serve as a bar-shaped member.

For the breather hose 27, for example, not only may the cover 35 be applied as described above, but also the bar-shaped member 36 may be applied. It is preferred that at least one of the cover 35 and the bar-shaped member 36 be applied to the breather hose 27.

For the breather port 26, a member having a shape other than a bar shape can be provided instead of the bar-shaped member 36 as a member to protect the breather port 26.

It is apparent that many changes and modifications may be made to the present invention in consideration of the above-described teachings. Therefore, it should be understood that the present disclosure may be practiced in a manner other than that described herein within the scope of the appended claims.

### DESCRIPTION OF REFERENCE NUMERALS

1: Tractor
2: Traveling machine body
3: Front wheel (front vehicle wheel)
7: driving section
8: Driver's seat
11: Step
12: Fuel tank
13: Front part of fuel tank (fuel storage section)
20: Fuel supply port
26: Breather port
27: Breather hose
28: air outlet
31: Partition member
32: Frame part
33: Plate part
35: Cover
36: Bar-shaped member
38: First space
39: Second space

## Claims

1. A tractor comprising:
a driving section that is provided on a traveling machine body and where a driver gets into and out of;
a step that is provided to the driving section and used for getting into and out of the driving section;
a fuel storage section that has a fuel supply port and is provided in front of the step; and
a breather hose that is connected to a breather port provided at the fuel storage section,
wherein the breather hose is provided so as to extend in an up-down direction of the traveling machine body in such a manner that an upper part of the breather hose is positioned above the fuel supply port, and
the breather hose is provided such that a lower part of the breather hose is connected to the breather port, and an air outlet that constitutes an outlet for air from the breather port is provided at the upper part of the breather hose.

2. The tractor according to claim 1, wherein
the fuel supply port and the breather port are provided on an upper surface of the fuel storage section, and
the breather port is arranged outside in a vehicle width direction on the upper surface of the fuel storage section.

3. The tractor according to claim 1 or 2, further comprising:
a partition member that is provided between a driver's seat provided in the driving section and a front vehicle wheel arranged in front of the driving section and that partitions at least part of a space between the driver's seat and the front vehicle wheel,
wherein the breather hose is supported by the partition member.

4. The tractor according to claim 3, wherein
the partition member has at least one of a frame part composed of a frame-shaped member and a plate part composed of a plate-shaped member, and
the partition member supports the breather hose by the frame part or the plate part.

5. The tractor according to any one of claims 1 to 4, further comprising:
a cover that is arranged around at least the upper part of the breather hose and covers at least the upper part of the breather hose.

6. The tractor according to any one of claims 1 to 5, further comprising:
a bar-shaped member that is provided at least in front of the breather port.

7. The tractor according to claim 6, further comprising:
a cover that is arranged around at least the upper part of the breather hose and covers at least the upper part of the breather hose,
the bar-shaped member is attached to the cover and partitions a space around the breather port and the fuel supply port into a first space in which the breather port and the fuel supply port are located and a second space that is located in front of the first space.
